(19) Europäisches Patentamt
European Patent Office
Office européen des brevets

(11) **EP 1 785 208 A2**

(12) # EUROPEAN PATENT APPLICATION

(43) Date of publication:
   **16.05.2007 Bulletin 2007/20**

(21) Application number: **06023249.3**

(22) Date of filing: **08.11.2006**

(51) Int Cl.:
   *B22F 1/00* (2006.01)   *B22F 9/16* (2006.01)
   *G11B 5/706* (2006.01)   *H01F 1/055* (2006.01)
   *H01F 1/20* (2006.01)   *C22C 1/04* (2006.01)

(84) Designated Contracting States:
   **AT BE BG CH CY CZ DE DK EE ES FI FR GB GR HU IE IS IT LI LT LU LV MC NL PL PT RO SE SI SK TR**
   Designated Extension States:
   **AL BA HR MK YU**

(30) Priority: **14.11.2005 JP 2005328317**

(71) Applicant: **DOWA Electronics Materials Co., Ltd. Chiyoda-ku Tokyo 101-0021 (JP)**

(72) Inventors:
   • **Ishikawa, Yuzo**
     **Okazaki-shi**
     **Aichi 444-0063 (JP)**
   • **Masada, Kenji**
     **Okayama-shi**
     **Okayama 702-8053 (JP)**

(74) Representative: **Geyer, Ulrich F.**
   **WAGNER & GEYER,**
   **Patentanwälte,**
   **Gewürzmühlstrasse 5**
   **80538 München (DE)**

(54) **Magnetic iron based powder having high coercive force, and their use for a magnetic recording medium**

(57)   A magnetic powder is provided composed of particles that, even when the particle size is refined, exhibits excellent magnetic properties, in particular, a high coercive force, for use in a high-density recording medium. The invention also provides a magnetic recording medium using the powder. The powder is an iron system magnetic powder containing, as an atomic ratio of Fe, a total of 0.01 to 10 at.% of one or more selected from W and Mo, particularly a magnetic powder comprised mainly of $Fe_{16}N_2$. The magnetic powder is able to exhibit a high coercive force of 238 kA/m (3000 Oe) or more. In addition to the W and Mo, the magnetic powder may contain, as an atomic ratio of Fe, a total of up to 25 at.% of one or more selected from Al and a rare earth element (defined as including Y).

EP 1 785 208 A2

**Description**

Field of the Invention

The present invention relates to an iron system magnetic powder for use in a high recording density magnetic recording medium, particularly to a powder that imparts a high coercive force Hc, and to a magnetic recording medium using the iron system magnetic powder.

Description of the Prior Art

In order to achieve the increasingly higher recording densities required by today's magnetic recording media, recording wavelengths are being shortened. However, this requires that the size of the magnetic particles be much smaller than the length of the region used to record the short-wavelength signal. If it is not, a distinct magnetic transition cannot be produced, making practical recording impossible. The particle size of the magnetic powder therefore has to be sufficiently smaller than the recording wavelength.

To achieve a higher recording density, it is also necessary to increase the resolving power of the recording signal, so reduction of magnetic recording medium noise is also important. Particle size is a major factor in noise, so noise can be reduced by reducing the size of the particles. This also makes it necessary for a magnetic powder used for high-density recording to have a sufficiently small particle size.

Currently, a problem is that reducing the particle size of magnetic powder used for higher recording densities also lowers the coercive force Hc. Therefore, the magnetic powder for use in a higher density magnetic recording medium has to have a higher coercive force Hc to retain the magnetism in the high-density medium and to ensure the output.

Even if such a magnetic powder could be obtained, phenomena occur that, while not being major problems when conventional long recording wavelengths are used, are major problems in the case of the shortest wavelength recording regions. When the magnetic layer is formed by applying a thick coating of the magnetic powder, specific problems include the pronounced effect of self-demagnetization loss and thickness-loss attributable to the thickness of the magnetic layer, making it impossible to attain sufficient resolving power. Such phenomena cannot be eliminated merely by improving the magnetic properties of the magnetic powder or by using medium production technologies to improve the surface properties, but require that the thickness of the magnetic layer be reduced. The degree to which the magnetic layer thickness can be reduced is limited when a conventional magnetic powder having a particle size in the order of 100 nm is used, so from that standpoint too, a small particle size is a requirement.

However, when particle refinement reaches a point at which the decrease in particle volume exceeds a certain degree, thermal fluctuation results in a pronounced degradation in magnetic properties, and a further decrease in particle size gives rise to superparamagnetism, at which point magnetism ceases to be exhibited. Another problem is that the increase in the specific surface area accompanying the refinement in particle size degrades oxidation resistance. Thus, a magnetic powder suitable for use in a high-density recording medium requires a thermal stability that can resist superparamagnetism even when the particle size is decreased. That is, the powder has to be capable of achieving a large anisotropy constant, a high Hc (coercive force), a high $\sigma$s, a low switching field distribution (SFD) and high oxidation resistance, and must be composed of particles fine enough to enable very thin coating.

JP 2001-6147 A(Reference 1) describes a magnetic powder having excellent magnetic properties for a high-density recording medium, comprising ferromagnetic metal particles having a long-axis diameter of 30 to 120 nm, an axial ratio of 3 to 8, an Hc of 79.6 to 318.5 kA/m and a $\sigma$s of 100 to 180 $Am^2$/kg.

JP 2000-277311 A and WO 03/079333 (References 2 and 3) describe an iron nitride magnetic material composed of $Fe_{16}N_2$ as the main phase. In Reference 2, there is disclosed an iron nitride magnetic material of large specific surface area that exhibits a high coercive force and a high saturation magnetization, while excellent magnetic properties can be achieved regardless of shape due to a synergistic effect between the crystal magnetic anisotropy of the $Fe_{16}N_2$ phase and enlargement of the specific surface area of the magnetic powder. Reference 3 also describes a rare earth-iron nitride system magnetic powder composed of substantially spherical or ellipsoid particles, and states that even though it is composed of fine particles in the order of 20 nm (having an average particle volume of 4187 $nm^3$), it has a high coercive force of 200 kA/m (2512 Oe) or more and a high saturation magnetization due to its small BET specific surface area, and that as such, use of the rare earth-iron nitride system magnetic powder can provide a dramatic increase in the recording density of a coating type magnetic recording medium.

Object of the Invention

As described in References 2 and 3, magnetic powder whose main phase is $Fe_{16}N_2$ that exhibits a large crystal magnetic anisotropy has high potential as a magnetic material. However, the recent trend towards tape media with even higher recording densities has generated a need to develop fine particles for that purpose.

As smaller particles are developed, the smaller particle size is accompanied by a degradation of the magnetic properties. In particular, a decrease in the coercive force Hc makes the particles susceptible to the effect of thermal fluctuations. The effect of thermal fluctuations is that the magnetic powder is unable to retain its magnetization, meaning that it cannot retain information recorded on the recording medium, which in the worst case can result in the loss of the recorded information.

The object of the present invention is to provide magnetic powder composed of particles that, even when the particle size is decreased, has excellent magnetic properties, in particular, a high coercive force, for use in a high-density recording medium, and to provide a magnetic recording medium using the powder.

Summary of the Invention

Based on various studies, the present inventors found that a magnetic powder could be obtained having good magnetic properties, especially coercive force Hc, that, when used to form a tape, is not susceptible to the effect of thermal fluctuations, formed by reducing iron oxyhydroxide or iron oxide containing an element such as W in solid solution therein, or that is adhered thereto, and then nitriding, if necessary.

Further research by the inventors revealed that the coercive force could be greatly improved by adding an element such as Mo besides W. That is, magnetic powder having an excellent coercive force not seen before could be obtained by using as the starting material iron oxyhydroxide or iron oxide containing specific elements in solid solution or adhered thereto.

The present invention provides an iron system magnetic powder containing, as an atomic ratio of Fe, a total of 0.01 to 10 atomic percent (at.%) of one or more selected from W and Mo, and in particular, a magnetic powder comprised mainly of $Fe_{16}N_2$. The invention also provides the iron system magnetic powder as above, further containing, as an atomic ratio of Fe, a total of up to 25 at.% of one or more selected from Al and a rare earth element (defined as including Y). Here, this atomic ratio of element X (W, Mo, Al, rare earth element, and so forth) is the ratio of the amounts of element X and Fe in the powder, expressed in at.%ages. Specifically, a value is used that is determined by the following equation (1), using the amount of X (at.%) and the amount of Fe (at.%) calculated from quantitative analysis of the powder.

$$\text{X amount (at.\%) / Fe amount (at.\%) X 100 ..... (1)}$$

The element X may be present in the magnetic phase in solid solution or adhered to the surface of the particles.

The iron system magnetic powder of the present invention is a magnetic powder having Fe as its main component, such as $\alpha$-Fe, Fe-Co alloy, iron nitride (especially one in which $Fe_{16}N_2$ is the main component), or such a magnetic powder that is treated with oxidizing the surfaces on these particles, especially one having a coercive force Hc of 238 kA/m (3000 Oe) or more. In addition to one or more selected from W and Mo, the magnetic powder of the invention may contain one or more selected from N, Co, Al, and a rare earth element (defined as including Y). Another element that may be detected by element analysis is the oxygen of the oxidation film. The remaining portion is substantially Fe. Here, "substantially" signifies that other elements may be accompanied with in to the extent that such accompanying does not interfere with the object of the invention. Also, "the remaining portion is substantially Fe" includes cases in which the remainder is Fe and unavoidable impurities.

Here, "$Fe_{16}N_2$ is the main component" refers to a magnetic powder exhibiting an Co-K$\alpha$ X-ray diffraction pattern in which the intensity ratio $I_1/I_2$ between a peak intensity $I_1$ detected in the vicinity of $2\theta = 50.0°$ and a peak intensity $I_2$ detected in the vicinity of $2\theta = 52.4°$ is in the range of 1 to 2. Here, $I_1$ is the peak intensity of the (202) surface of the $Fe_{16}N_2$ phase, and $I_2$ is the peak intensity where the peak intensity of the (220) surface of the $Fe_{16}N_2$ phase and the peak intensity of the (110) surface of the Fe phase overlap.

Ideally, the magnetic powder of the present invention is composed of nanoparticles having an average particle size (determined by a method described later herein) of not more than 20 nm.

The present invention also provides a magnetic recording medium having a magnetic layer that uses the above magnetic powder.

In accordance with this invention, a magnetic powder for a high-density magnetic recording medium is provided that can dramatically improve the decrease in magnetic properties, especially coercive force Hc, caused by the increasing refinement of the particle size of magnetic powder. As such, the present invention contributes to the achievement of a major improvement in the recording density of a magnetic recording medium, and to the improvement in the performance of electronic equipment equipped with such a medium.

Description of the Preferred Embodiments

The magnetic powder of the present invention provides a great improvement with respect to the decrease in magnetic properties, particularly coercive force Hc, caused by refinement of the particle size of magnetic powder, as described above. The method of improving the coercive force comprises the inclusion of one or more of W and Mo in the iron system magnetic particles. As described hereinbelow, these elements may be incorporated in solid solution at the stage at which the iron oxyhydroxide or iron oxide constituting the starting powder is formed, or may be adhered to the particles. By reducing and, if necessary, nitriding the starting powder thus constituted, it is possible to obtain magnetic particles that are nanometric in size but have a high coercive force. At present, the mechanism whereby the coercive force is improved by the inclusion of one or more of W and Mo is not clear. However, based on the clear difference in coercive force compared to that of conventional magnetic powders which do not contain these elements, it can be inferred that the W and/or Mo contribute to the very orderly alignment of the magnetic moments of the crystallites within the magnetic particles which have shape magnetic anisotropy, or that the W and/or Mo have the effect of markedly reducing strains in the crystalline structure of the magnetic powder particles which have crystal magnetic anisotropy.

The effect that W and Mo have with respect to improving the coercive force is manifested when the total content of W and Mo in the end magnetic powder, expressed as an atomic ratio of the Fe, is 0.01 at.% or more. A greater effect is achieved with a content of 0.5 at.% or more. However, when the content exceeds 10 at.%, the coercive force improvement effect undergoes a decrease, possibly due to the effect of an increase in the non-magnetic component. Therefore, the total content of one or more of W and Mo is set to within the range of 0.01 to 10 at.%, and more preferably to within the range of 0.05 to 3 at.%.

Al and rare earth elements (defined as including Y) prevent the occurrence of sintering during reduction of the starting powder, so in the present invention, it is desirable to utilize the sintering-prevention effect thereof. Therefore, one or more of these sintering-preventing elements is incorporated in solid solution in the starting powder, or is adhered thereto. In terms of atomic ratio of the Fe in the end magnetic powder, the total content of Al and rare earth element in the starting powder should be up to 25 at.%. If the content is too small the effect will not be sufficient, so it is preferable that the total content would not be less than 5.0 at.%. In terms of atomic ratio with respect to the Fe, a desirable content of Al is up to 20 at.%, and a desirable content of rare earth element (defined as including Y) is up to 5 at.%, and more preferably up to 3 at.%.

It is necessary to evaluate the relationship between the magnetic properties of the magnetic powder and the average particle diameter. A powder with an average particle diameter over 20 nm and a coercive force of less than 238 kA/m (3000 Oe) does not have much merit over a conventional magnetic powder for magnetic recording medium applications. Therefore, the aim of the present invention is a magnetic powder in which the coercive force is improved to 238 kA/m or more due to W and/or Mo inclusion. Magnetic powder composed of nanoparticles having an average particle diameter of 20 nm or less that exhibits a coercive force of 238 kA/m or more has excellent magnetic properties not exhibited in conventional magnetic powders, and can be described as a magnetic powder that is particularly suitable for high-density magnetic recording medium applications. The particle diameter depends on the particle size of the starting powder, so the average particle diameter of the end magnetic powder can be controlled to be not more than 20 nm by synthesizing and using starting powder having a small particle size. As described, the coercive force can be controlled by using a specified content amount of W and/or Mo.

Described below is the manufacturing method used to obtain the iron system magnetic powder of this invention having a higher coercive force.

First, as the starting powder that is to be subjected to reduction treatment, there is prepared iron oxyhydroxide containing one or more of W and Mo, or an iron oxide such as hematite, magnetite or wustite or the like as the same as containing one or more of W and Mo. Here, "containing one or more of W and Mo" includes a case in which W and Mo are present in the particles of the starting powder as solid solution, a case in which W and Mo are present adhered to the surface of the particles, and a case in which the W and Mo are present in both solid solution and adhered to the particle surface.

Iron oxyhydroxide containing at least one of W and Mo in solid solution is produced by using a wet method to obtain the iron oxyhydroxide, in which the one or more of W and Mo is associated with the reaction used to produce the iron oxyhydroxide. For example, in the method of producing iron oxyhydroxide by neutralizing an aqueous solution of a ferrous salt (such as an aqueous solution of $FeSO_4$, $FeCl_2$ or $Fe(NO_3)_2$) with an alkali hydroxide (an aqueous solution of NaOH or KOH) followed by oxidation with air or the like, all that needs to be done is to carry out the iron oxyhydroxide producing reaction in the presence of an oxide salt, a nitrate, a sulfate or a chloride containing one or more of W and Mo. Alternatively, it is possible to use the method of producing iron oxyhydroxide by first neutralizing an aqueous solution of a ferrous salt with a carbonic alkali and oxidizing the result using air or the like, and carry out the iron oxyhydroxide producing reaction in the presence of an oxide salt, a sulfate or a chloride containing one or more of W and Mo. Another method is to neutralize an aqueous solution of a ferric salt (such as an aqueous solution of $FeCl_3$ or the like) with NaOH or the like and carry out the reaction for producing the iron oxyhydroxide in the presence of an oxide salt, a sulfate or a chloride containing one or more of W and Mo.

In these manufacturing methods, an intering-preventing elements such as Al and rare earth elements (defined as including Y) may be accompanied in the iron oxyhydroxide particles in addition to the W and/or Mo. In such a case, the sintering-prevention may be incorporated in solid solution in the iron oxyhydroxide particles, or adhered thereto, during the step of synthesizing the particles, which can be done by adding a water-soluble Al salt or an aqueous solution of a rare earth element or yttrium or the like.

Another method that can be used is to adhere the W and/or Mo to the surface of the particles after producing the iron oxyhydroxide. In the above method of producing iron oxyhydroxide, that can be done by including Al and rare earth element in solid solution without carrying out the operation of including the W and/or Mo in solid solution, or by producing the iron oxyhydroxide without any solid solution operation. Then, an oxide salt, a nitrate, a sulfate or a chloride containing one or more of W and Mo can be added to a solution in which the iron oxyhydroxide is dispersed, followed by neutralization with an alkali, or the evaporation of water from the dispersion, to thereby adhere one or more of W and Mo to the surface of the particles. Such a method can include adhering the W and/or Mo after incorporating said element or elements in solid solution in the particles.

Sintering-preventing elements such as Al and rare earth elements (defined as including Y) may be adhered together with the W and Mo. That can be done by also adding water-soluble Al salt or an aqueous solution of a rare earth element or yttrium or the like to the solution in which the iron oxyhydroxide has been dispersed.

Oxide salts, chlorides and sulfates of W and Mo that may be used include sodium tungstate dihydrate, anhydrous sodium tungstate, potassium tungstate, calcium tungstate, barium tungstate, tungsten chloride, tungsten ethoxide, sodium molybdate dihydrate, ammonium molybdate, potassium molybdate, calcium molybdate, cobalt molybdate, lead molybdate, magnesium molybdate, lithium molybdate, molybdenum (III) chloride, molybdenum (V) chloride, molybdenum (IV) sulfide and molybdenum (VI) sulfide.

The iron oxyhydroxide containing one of W and Mo thus obtained is filtered and washed, dried at up to 200°C, after which it can be used as the starting powder. Alternatively, the iron oxyhydroxide can be subjected to dehydration treatment at 200 to 600°C, or to reduction in a hydrogen atmosphere having a water concentration of 5 to 20 mass percent to transform the iron oxyhydroxide into iron oxide system particles constituting the starting powder. There is no particular limitation on the starting powder, other than it be an oxide containing iron and oxygen/hydrogen. Examples of materials other than iron oxyhydroxide (goethite) that may be used include hematite, maghemite, magnetite and wustite. Herein, these iron oxyhydroxides or oxides are referred to as the starting powder.

Next, the starting powder is reduced to $\alpha$-Fe or Fe-Co alloy. Any reduction method may be used that reduces the starting powder to $\alpha$-Fe or the like. A dry method using hydrogen ($H_2$) is generally suitable. The preferred temperature at which reduction is performed by the dry method is 300 to 700°C, and more preferably 350 to 650°C. A multi-stage reduction process may be used in which, after reduction at the above temperature, the temperature is raised to improve the crystallinity of the material.

When the reduction is followed by nitriding, the nitriding treatment may be done using the ammonia nitriding method described by JP Hei 11-340023A. The method comprises obtaining iron nitride particles comprised mainly of $Fe_{16}N_2$ phase by maintaining the material obtained by the aforementioned reducing method for several tens of hours at a temperature of up to 200°C in a stream of nitrogen-containing gas that is typically ammonia gas, or in a stream of mixed gas containing not less than 50 vol% of the nitrogen-containing gas. This may be carried out under an internal reactor pressure of 0.1 MPa or more. Moreover, the amount of oxygen in the gas used in the nitriding treatment is preferably several ppm or less. The concentration of the oxygen, hydrogen or water content in the nitriding treatment reactor is preferably not more than 0.1 vol%, and more preferably is not more than several hundred ppm.

The nitriding treatment temperature, time and atmosphere can be effectively controlled to control the amount of N in the magnetic powder, as an atomic ratio of the Fe, to 5 to 30 at.%, and preferably to around 10 to 30 at.%. If the N/Fe atomic ratio is less than 5 at.%, the improvement effect of the nitriding, which is to say the improvement due to the crystal magnetic anisotropy, will not be sufficiently manifested. Conversely, excessive nitriding produced by a ratio that exceeds 30 at.% will give rise to phases other than the desired $Fe_{16}N_2$, degrading the magnetic properties. Following this, the surface of the particles is slowly oxidized in a mixed gas comprising nitrogen containing 0.01 to 2 vol% oxygen to obtain iron system magnetic powder that can be handled stably in the atmosphere.

Before moving on to the description of examples of the present invention, the testing methods and the like used to evaluate the properties are described, as follows.

Analysis of composition

The amount of Fe in the magnetic powder was determined using a COMTIME-980 Hiranuma Automatic Titrator manufactured by Hiranuma Sangyo Co., Ltd. The amounts of Al, rare earth elements (defined as including Y), W, and Mo were determined using an Iris/AP Inductively Coupled Plasma Spectrometer manufactured by Jarrell Ash Japan. These determinations were in weight percentages, which were converted to the atomic percentages of the elements, from which the atomic ratios of element X to Fe (X/Fe atomic ratio) were calculated in accordance with equation (1).

Evaluation of bulk powder properties

Average particle diameter (nm): Transmission Electron Microscope (TEM) photographs at a magnification of 100,000 times or more were used to measure the longest diameter of each of 1000 particles shown in a photograph. These individual particle diameters (nm) were then averaged to obtain the average particle diameter. In selecting particle images in the photographs, two or more particles that were overlapped were excluded as being unclear whether they are sintered or not; only when there were clearly distinguishable borders between particles were those particles counted.

Magnetic properties (coercive force Hc, saturation magnetization $\sigma$s, and square ratio SQ): A vibrating sample magnetometer (VSM) manufactured by Toei Kogyo Co., Ltd. was used to perform the measurements in a maximum external magnetic field of 796 kA/m applied in one direction (taken as the positive direction). The external magnetic field was then decreased to zero in increments of 7.96 kA/m, and applied in the reverse direction (negative direction) in increments of 7.96 kA/m to produce a hysteresis curve from which the Hc, $\sigma$s and SQ were obtained. Here, square ratio SQ = residual magnetization or / saturation magnetization $\sigma$s.

Specific surface area: Measured by the BET method.

$Fe_{16}N_2$ phase generation rate

A RINT-2100 X-ray diffractometer manufactured by Rigaku Co., Ltd. that used Co-Ka was used to obtain X-ray diffraction patterns by scanning the magnetic powder $2\theta$ = 20 to 60° at 40 kV, 30 mA, at a scanning speed of 0.80° /min and a sampling width of 0.040°, to obtain the above-described intensity ratio $I_1/I_2$ between peak intensity $I_1$ detected in the vicinity of $2\theta$ = 50.0° and peak intensity $I_2$ detected in the vicinity of $2\theta$ = 52.4°, and the ratio was used to evaluate the $Fe_{16}N_2$ phase generation rate. An $I_1/I_2$ of 2 was taken to indicate that the generation rate of the $Fe_{16}N_2$ in the particles was 100%. An $I_1/I_2$ of 1 was taken to indicate that the generation rate of the $Fe_{16}N_2$ in the particles was 50%. Therefore, the powder of the present invention having $Fe_{16}N_2$ as the main component is one in which $I_1/I_2$ is in the range 1 to 2, meaning that the $Fe_{16}N_2$ phase generation rate is 50 to 100%.

Evaluation of tape properties

(1) Preparation of magnetic coating material

0.500 g of the magnetic powder was weighed out and placed in a pot (inside diameter: 45 mm, depth: 13 mm) and allowed to stand for 10 min. with the cover open. Next, 0.700 ml of a vehicle [mixed solution of MR-110 vinyl chloride resin (22 mass percent), cyclohexanone (38.7 mass percent), acetylacetone (0.3 mass percent), n-butyl stearate (0.3 mass percent) and methyl ethyl ketone (MEK) (38.7 mass percent)] was added to the pot using a micropipette. Immediately following that, 30 g of steel balls (2 $\varphi$) and ten nylon balls (8 $\varphi$) were added to the pot and the pot was covered and allowed to stand for 10 minutes. The pot was then put into a centrifugal ball mill (Fritsch P-6) and the speed of the mill was gradually raised to 600 rpm, at which speed dispersion was continued for 60 minutes. The mill was then stopped, the pot was removed, and a micropipette was used to add to the dispersion 1.800 ml of an adjustment solution prepared in advance by mixing MEK and toluene at a ratio of 1:1. To complete the dispersion process, the pot was again placed in the centrifugal ball mill and rotated at 600 rpm for 5 minutes.

(2) Preparation of magnetic tape

Upon completion of the dispersion, the pot was opened and the nylon balls removed. Then the coating material, together with the steel balls, was placed in an applicator (55 $\mu$m) and coated onto a support film (15-$\mu$m-thick polyethylene film (product name: 15C-B500) manufactured by Toray Industries. The coated film was then promptly placed at the center of the coil of a 5.5 kG magnetic orientation device to orient the particles in the magnetic field direction, and was then dried.

(3) Test evaluation of tape properties

Magnetic properties measurement: The coercive force Hcx, SFDx and SQx of the obtained tape were measured by a VSM under a maximum externally applied magnetic field of 796 kA/m.

Examples

Example 1

To 4 l (liters) of an 0.2 mol/l aqueous solution of $FeSO_4$ were added 0.5 l of a 12 mol/l aqueous solution of NaOH and an amount of sodium tungstate dihydrate whereby W/Fe (here and hereinbelow, the atomic ratio of W to Fe) = 1.0 at.%, and an amount of sodium aluminate whereby Al/Fe = 20 at.%. The mixture was then maintained at 40°C while air was blown into it at a flow rate of 300 ml/min for a period of 2.5 hours, thereby precipitating iron oxyhydroxide containing W and Al in solid solution. Upon completion of this oxidation treatment, the precipitated iron oxyhydroxide was filtered and washed, and again dispersed in water. An amount of yttrium nitrate whereby Y/Fe = 1.0 at.% was added to the dispersion, and the pH was adjusted to 7 to 8 at 40°C, using a 12 mol/l aqueous solution of NaOH, thereby adhering yttrium to the surface of the particles, which were then filtered, washed and dried in air at 110°C.

Analysis of the composition of the powder thus obtained showed that the atomic ratios of the W, Al and Y to the Fe were: W/Fe = 0.51 at.%; Al/Fe = 18.5 at.%; Y/Fe = 1.0 at.%.

The powder is made into the starting material by 3 hours of reduction treatment at 650°C in hydrogen gas followed by cooling at 100°C. At this temperature, the hydrogen gas is switched to ammonia gas and the temperature is raised to 130°C for 20 hours of nitriding treatment. Following the nitriding, the gas is switched to nitrogen and cooled to 80°C. Then, air was added to give the nitrogen gas an oxygen concentration of 2 vol% to subject the surface of the particles to slow oxidation, forming an oxidation film on the surface of the particles.

X-ray diffraction analysis confirmed that the main component of the magnetic powder thus obtained was $Fe_{16}N_2$ (this was also true in the case of the other examples and the comparative example described below). Using the method described in the above, TEM images of the powder particles magnified 174,000 times were used to obtain the average particle diameter, which was found to be 18.8 nm. The above methods were also used to obtain the BET specific surface area, the Hc, the σs, the SQ, the Δσs and the ΔHc. In addition, the method described in the foregoing was used to produce a magnetic tape with a magnetic coating material using the magnetic powder, and the Hcx, SFDx and SQx of the tape were obtained. The results (and in respect of the other examples and the comparative example described below) are shown in Table 1.

Example 2

Magnetic powder was prepared under the same conditions as Example 1, except that in the iron oxyhydroxide precipitation step, sodium tungstate dihydrate was added in an amount whereby W/Fe = 0.1 at.%. The same measurements as those of Example 1 were carried out.

Example 3

Magnetic powder was prepared under the same conditions as Example 1, except that in the iron oxyhydroxide precipitation step, sodium tungstate dihydrate was added in an amount whereby W/Fe = 5.0 at.%. The same measurements as those of Example 1 were carried out.

Example 4

Magnetic powder was prepared under the same conditions as Example 1, except that in the iron oxyhydroxide precipitation step, instead of sodium tungstate dihydrate, sodium molybdate dihydrate was added in an amount whereby Mo/Fe = 1.0 at.%. The same measurements as those of Example 1 were carried out.

Comparative Example 1

The same method as that of Example 1 was used to prepare magnetic powder, except that in the iron oxyhydroxide precipitation step, no sodium tungstate dihydrate was added.

Table 1

| | Magnetic Powder Composition (atomic ratio to Fe) | | | | Powder Properties | | | | | Tape Properties | | |
|---|---|---|---|---|---|---|---|---|---|---|---|---|
| | W/Fe (at. %) | Mo/Fe (at. %) | Al/Fe (at.%) | Y/Fe (at.%) | Average Particle Diameter (nm) | BET (m$^2$/g) | Hc (kA/m) | σs (Am$^2$/kg) | SQ | Hcx (kA/m) | SFDx | SQx |
| Example 1 | 0.51 | - | 18.5 | 1.0 | 18.8 | 81 | 251 | 59 | 0.53 | 300 | 0.74 | 0.75 |
| Example 2 | 0.09 | - | 17.4 | 1.0 | 18.6 | 79 | 240 | 62 | 0.51 | 287 | 0.82 | 0.74 |
| Example 3 | 2.8 | - | 16.9 | 1.0 | 18.9 | 80 | 254 | 65 | 0.53 | 299 | 0.71 | 0.73 |
| Example 4 | - | 0.45 | 18.1 | 1.0 | 17.8 | 80 | 241 | 61 | 0.52 | 289 | 0.84 | 0.73 |
| Comp. Ex. 1 | - | - | 17.2 | 1.0 | 17.9 | 82 | 203 | 53 | 0.50 | 253 | 1.03 | 0.75 |

As can be seen from Table 1, the iron system magnetic powders of the inventive examples containing prescribed amounts of W or Mo each exhibited a much higher coercive force Hc than the comparative example not containing those elements. Moreover, although the powders of the inventive examples were composed of nanoparticles with an average particle diameter of not more than 20 nm, the coercive force Hc of each easily exceeded the cited level of 238 kA/m (3000 Oe). In addition, the tape characteristics showed a major improvement in the coercive force Hcx.

**Claims**

1.  Iron system magnetic powder containing, as an atomic ratio of Fe, a total of 0.01 to 10 atomic percent of one or more selected from W and Mo.

2.  Iron system magnetic powder comprising mainly $Fe_{16}N_2$ containing, as an atomic ratio of Fe, a total of 0.01 to 10 atomic percent of one or more selected from W and Mo.

3.  The iron system magnetic powder according to claim 1 or 2, containing, as an atomic ratio of Fe, a total of up to 25 atomic percent of one or more selected from Al and a rare earth element (defined as including Y).

4.  The iron system magnetic powder according to any of claims 1 to 3, wherein the coercive force Hc thereof is 238 kA/m or more.

5.  The iron system magnetic powder according to any of claims 1 to 4, wherein the average particle diameter is not more than 20 nm.

6.  A magnetic recording medium having a magnetic layer formed of an iron system magnetic powder according to any of claims 1 to 5.

## REFERENCES CITED IN THE DESCRIPTION

**Patent documents cited in the description**

- JP 2001006147 A
- JP 2000277311 A
- WO 03079333 A
- JP 11340023 A